Europäisches Patentamt

European Patent Office

Office européen des brevets

(11) Publication number: 0 541 157 A1

# EUROPEAN PATENT APPLICATION

(21) Application number: 92203309.7

(22) Date of filing: 28.10.92

(51) Int. Cl.5: F25D 11/02, F25B 41/06, F25B 49/02

(30) Priority: 04.11.91 EP 91202857

(43) Date of publication of application:
12.05.93 Bulletin 93/19

(84) Designated Contracting States:
DE FR GB IT

(71) Applicant: N.V. Philips' Gloeilampenfabrieken
Groenewoudseweg 1
NL – 5621 BA Eindhoven(NL)

(72) Inventor: Kuijpers, Lambertus Johannes
Maria
c/o Int. Octrooibureau B.V., Prof. Holstlaan 6
NL – 5656 AA Eindhoven(NL)
Inventor: Benschop, Antonius Adrianus
Johannes
c/o Int. Octrooibureau B.V., Prof. Holstlaan 6
NL – 5656 AA Eindhoven(NL)
Inventor: De Wit, Johannes Adrianus
c/o Int. Octrooibureau B.V., Prof. Holstlaan 6
NL – 5656 AA Eindhoven(NL)

(74) Representative: Cuppens, Hubertus Martinus
Maria et al
INTERNATIONAAL OCTROOIBUREAU B.V.
Prof. Holstlaan 6
NL – 5656 AA Eindhoven (NL)

(54) Refrigerating device.

(57) A refrigerating device (1) provided with a first cooling circuit containing a cooling medium and comprising a compressor (25), a first condenser (27) and a first evaporator (21), and with at least two cooling circuits (9, 17) containing cooling media, each cooling circuit (9, 17) comprising an evaporator (7, 15) and a condenser (11, 19) which is in heat – exchanging contact with the first evaporator (21).

FIG.1

The invention relates to a refrigerating device provided with a first cooling circuit containing a cooling medium and comprising a compressor, a first condenser and a first evaporator, a second cooling circuit containing a cooling medium and comprising a second evaporator situated in a freezer compartment and a second condenser which is in heat−exchanging contact with the first evaporator, and a third evaporator situated in a refrigerator compartment.

In such a refrigerating device known from US Patent 4,383,421, the third evaporator situated in the refrigerator compartment forms part of the first cooling circuit. The second and third evaporator are operated alternately in that the cooling medium in the first circuit is made to flow either alternately at a comparatively high pressure through the third and first evaporator, or in that the cooling medium is made to flow through a restriction and then at a comparatively low pressure through the first evaporator, during which the third evaporator is disconnected from the first cooling circuit by means of a valve.

With a comparatively high pressure prevailing in the first evaporator, the second cooling circuit is "thermally closed" and thus substantially not operative since the cooling medium present in the second cooling circuit hardly shows any condensation in the second condenser which is in heat−exchanging contact with the first evaporator. The quantity of cooling medium required in the first cooling circuit for cooling the freezer compartment differs strongly from the quantity of cooling medium required for cooling the refrigerator compartment. This is disadvantageous for the controllability of *inter alia* the temperatures of the refrigerator and freezer compartments of the refrigerating device.

Simultaneous cooling of the refrigerator and freezer compartments is not possible in the known refrigerating device. This is a limitation of the control possibilities of the

The invention has for its object to provide a refrigerating device which has better control possibilities.

The refrigerating device according to the invention is for this purpose characterized in that the refrigerating device is provided with a third cooling circuit which contains a cooling medium, which can be closed off, and which comprises the third evaporator situated in the refrigerator compartment and a third condenser which is in heat−exchanging contact with the first evaporator.

The difference in the quantity of cooling medium required in the first cooling circuit for cooling the refrigerator compartment or the freezer compartment is small as a result, so that the control possibilities are increased.

If there is a high pressure in the first evaporator, the cooling medium of the third cooling circuit only will condense in the third condenser. If a low pressure prevails in the first evaporator, the cooling medium of both the second and the third cooling circuit will condense in the relevant condensers. To prevent the temperature in the refrigerator compartment becoming too low, the third cooling circuit can be closed off, for example, by means of a valve between the third condenser and the third evaporator. The refrigerator compartment and the freezer compartment can be cooled both alternately and simultaneously with the refrigerating device according to the invention. This increases the control possibilities of the refrigerating device.

The pressure in the first evaporator may be increased or reduced by changing a restriction between the first condenser and the first evaporator. An embodiment of a refrigerating device according to the invention is for this purpose characterized in that the first circuit is provided with at least two restrictions connected in parallel, of which at least one restriction can be completely closed and which are situated between the first condenser and the first evaporator. Depending on whether a high or low pressure is desired in the first evaporator, a total restriction value formed by the parallel restrictions is reduced or increased in that the restriction which can be completely closed is opened or closed. A capillary tube may be used, for example, by way of restriction.

Another embodiment of a refrigerating device according to the invention is characterized in that the compressor is a compressor whose power is continuously controllable. By controlling the power with which the compressor is operated (the input power), it is possible to increase or reduce the quantity and the pressure of the cooling medium which is compressed by the compressor. The control possibilities of the refrigerating device are further increased by this.

Controlling the input power of the compressor in relation to the desired temperatures in the refrigerator and freezer compartments may be optimized, for example, as to their thermodynamic efficiency, which is realised in a simple manner in a further embodiment of a refrigerating device according to the invention in that the compressor is controllable by means of a microprocessor.

The invention will be explained in more detail with reference to the drawing in which:

Fig. 1 diagrammatically shows a refrigerating device according to the invention,

Fig. 2 is a control diagram for a refrigerating device as shown in Fig. 1, and

Fig. 3 shows a control circuit for a refrigerating device as shown in Fig. 1.

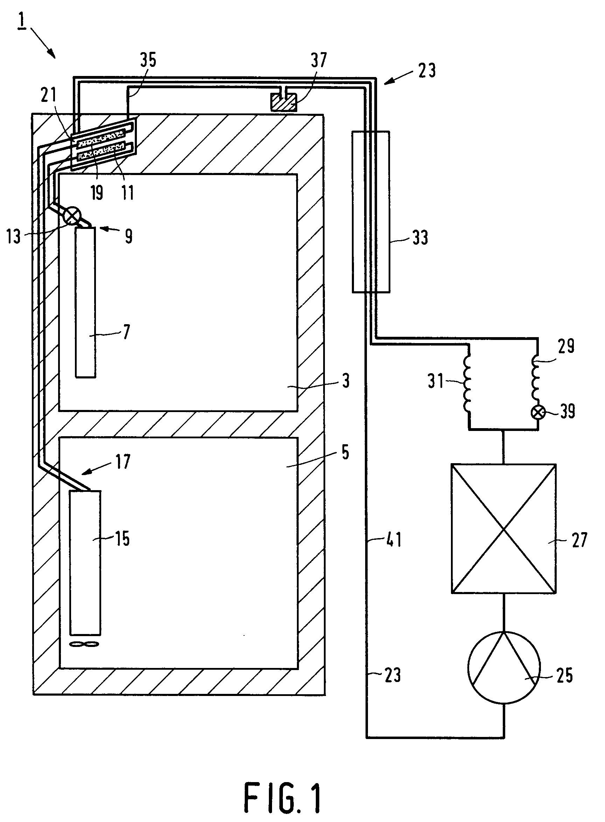

Fig. 1 shows a refrigerating device 1 which is provided with a refrigerator compartment 3 and a freezer compartment 5. The refrigerator compartment 3 is provided with an evaporator 7 (third evaporator) which forms part of a cooling circuit 9 containing an operational or cooling medium and further provided with a condenser 11. An electrically operated valve 13 is present between the condenser 11 and the evaporator 7. The freezer compartment 5 is provided with an evaporator 15 (second evaporator) which forms part of a cooling circuit 17 containing an operational or cooling medium and further provided with a condenser 19. The condensers 11 and 19 are situated in and are in heat−exchanging contact with an evaporator 21 (first evaporator) of a cooling circuit 23 which contains an operational or cooling medium. The cooling circuit 23 comprises a compressor 25, a condenser 27, two capillaries 29, 31 serving as restrictions, a heat exchanger 33, and the evaporator 21. The various elements of the cooling circuit 23 are interconnected by means of conduits. A liquid accummulator 37 is present in a conduit 35 from the evaporator 21 to the compressor 25. The capillary 29 can be closed by means of an electrically operated valve 39. It is possible to use a cooling medium in the first cooling circuit which is different from that used in the second and third cooling circuit. In the first cooling circuit this will be a, possibly combustible, cooling medium with a high thermal efficiency.

The operation of the refrigerating device 1 is as follows: for cooling the freezer compartment 5, the valves 13 and 39 are closed so that the cooling circuit 9 cannot operate and only capillary 31 is open. The gaseous operational or cooling medium is compressed by the compressor 25, condensed in the condenser 27, and then guided into the evaporator 21 through the capillary 31 at a comparatively low pressure. In the evaporator 21 the liquid cooling medium of the cooling circuit 23 absorbs heat from the cooling medium of the cooling circuit 17 present in the condenser 19 and evaporates. The cooling medium of the cooling circuit 17 condenses and flows to the evaporator 15 under the influence of gravity. The cooling medium evaporates again in the evaporator 15, thus removing heat from the freezer compartment 5, so that the freezer compartment 5 is cooled.

The cooling medium evaporated in the evaporator 21 is returned to the compressor 25 through a suction conduit 41. The gaseous cooling medium is at a lower pressure in the heat exchanger 33 than the liquid cooling medium, and the gaseous cooling medium coming from the evaporator absorbs heat from the liquid cooling medium going towards the evaporator.

The valves 13 and 39 are opened for cooling the refrigerator compartment 3. The cooling medium compressed by the compressor 25 and condensed in the condenser 27 is distributed over the two capillaries, the largest quantity of cooling medium flowing through the capillary 29 which has the lowest resistance. The result is that the cooling medium enters the evaporator 21 at a comparatively high pressure. At this comparatively high pressure in the first evaporator, the cooling circuit 17 is thermally closed because the cooling medium present therein will not condense in the condenser 19. In the evaporator 21, the cooling medium of the cooling circuit 23 absorbs heat from the cooling medium of the cooling circuit 9 present in the condenser 11 and evaporates. The cooling medium of the cooling circuit 9 condenses and flows towards the evaporator 7 under the influence of gravity. In the evaporator 7, the cooling medium evaporates again, thus removing heat from the refrigerator compartment 3, so that the refrigerator compartment 3 is cooled.

The valve 39 is closed and the valve 13 remains open for the purpose of simultaneous cooling of the refrigerator compartment 3 and the freezer compartment 5. The evaporator 21 then contains cooling medium at a comparatively low pressure, so that cooling medium is condensed both in the condenser 11 and in the condenser 19, and heat is removed from the refrigerator compartment 3 and from the freezer compartment 5.

If the compressor 25 is a compressor which is switched on and off alternately and whose input power cannot be controlled, a control arrangement for alternately cooling the refrigerator compartment and the freezer compartment may be used which corresponds to the arangements described in US Patent 4,383,421.

It is attractive, however, to use a power−controllable compressor 25 as described in, for example, US Patent 4,700,090. The input power of the compressor can be controlled through the input current. When the compressor 25 is operated at a comparatively high input power, comparatively much cooling medium is drawn into conduit 41 by suction, and the cooling medium in the evaporator 21 will be at a comparatively low pressure; when the compressor operates at a comparatively low input power, comparatively little cooling medium is drawn into conduit 41 by suction and the cooling medium in the evaporator 21 will have a comparatively high pressure, the result being that in the former case the freezer compartment and possibly the refrigerator compartment are cooled, and in the latter case the refrigerator compartment only.

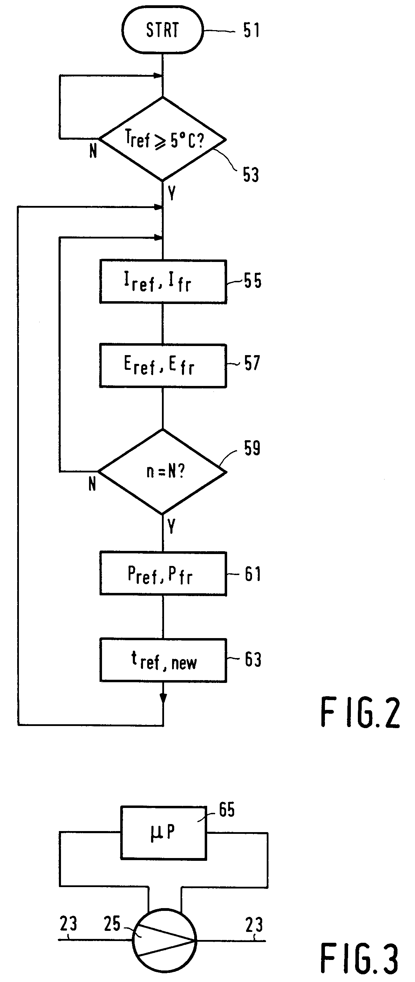

A control arrangement for a power−controllable compressor is described below with reference to Figs. 2 and 3. Normal use of the refrigerating device 1 is assumed, the refrigerator and freezer compartments being cooled alternately. Simultaneous cooling of the refrigerator and freezer compartments will be

EP 0 541 157 A1

discussed later.

The following temperatures are measured by a number of thermostats (not shown):

$T_{amb}$: ambient temperature outside the refrigerating device 1,

$T_{ref}$: the temperature in the refrigerator compartment 3,

$T_{fr}$: the temperature in the freezer compartment 5,

$T_{ev}$: the temperature of the evaporator 7.

The following data are registered or computed by means of a microcomputer 65:

$t_{ref}$: the time during which the refrigerator compartment 13 is cooled,

$t_{fr}$: the time during which the freezer compartment 5 is cooled,

$P_{ref}$: the power consumption during $t_{ref}$ for cooling the refrigerator compartment 3,

$P_{fr}$: the power consumption during $t_{fr}$ for cooling the freezer compartment 5,

$E_{ref}$: the input power in the compressor during cooling of the refrigerator compartment 3,

$E_{fr}$: the input power in the compressor during cooling of the freezer compartment 5.

The input power follows from the current through and the voltage across the compressor 25. The power consumption is determined from the input power and the time during which this input power is used. The additions "old" and "new" are used to indicate the previous and the present values.

The following data are also stored in the microcomputer 65:

$T_{ref,norm}$: the standard temperature of the refrigerator compartment, for example, 5° C,

$T_{ref,set}$: the temperature desired by the user in the refrigerator compartment 3,

$T_{fr,norm}$: the standard temperature of the freezer compartment, for example, −18° C,

$T_{fr,set}$: the temperature desired by the user in the freezer compartment 5,

and a number of starting values for $t_{ref}$, $t_{fr}$, $E_{ref}$, $E_{fr}$.

The time $t_{fr}$ during which the freezer compartment 5 is cooled is equal to the time required for defrosting the evaporator 7 of the refrigerator compartment 3, while the time $t_{fr}$ will always be longer than a minimum time duration set. The minimum time during which the refrigerator space 3 must remain switched off depends on the temperature $T_{ev}$ of the evaporator 7 in the refrigerator compartment 3. During cooling of the refrigerator compartment 3, the evaporator 7 has a temperature which is below the freezing point of water. The result is that moisture from the refrigerator compartment 3 freezes against the evaporator 7. To prevent an accummulation of ice, the cooling circuit 9 is not used after cooling of the refrigerator compartment 3 until the temperature of the evaporator 7 has risen to a few degrees above freezing point and the ice formed on the evaporator 7 has melted and has been discharged through a draining device (not shown).

The refrigerating device 1 is operated in the alternating or simultaneous mode, and started (block 51) with the starting values which have been determined in a standard test until $T_{ref}$ has a value of 5° C (block 53).

After that, the refrigerating device 1 is operated in the alternating mode and the microcomputer determines the difference between the desired and the actual temperatures in the refrigerator and freezer compartments during X cycles (X lying between 5 and 20), from which the values of $I_{ref}$ and $I_{fr}$ (block 55) are calculated as follows:

$$I_{ref} = \sum_{i=1}^{x} \frac{\Delta T_{ref}}{T_{ref,norm}}$$

$$\Delta T_{ref} = T_{ref} - T_{ref,set}$$

$$I_{fr} = \sum_{i=1}^{X} \frac{\Delta T_{fr}}{T_{fr,norm}}$$

$$\Delta T_{fr} = T_{fr} - T_{fr,set}$$

Then the input powers $E_{ref}$ and $E_{fr}$ (block 57) are calculated anew from:

4

$$E_{ref,new} = E_{ref,old} * \left(\frac{t_{ref,old}}{t_{ref,new}}\right) * \left(\frac{T_{ref,old} - T_{ref,set}}{T_{ref,norm}} + 1\right) * X1 * (1 + I_{ref})$$

$$E_{fr,new} = E_{fr,old} * \left(\frac{t_{fr,old}}{t_{fr,new}}\right) * \left(\frac{T_{fr,old} - T_{fr,set}}{T_{fr,norm}} + 1\right) * X2 * (1 + I_{fr})$$

in which:

X1 = 0,9 for Y1 ≤ 0,9
X1 = Y1 for 09 ≤ Y1 ≤ 1,1
X1 = 1,1 for Y1 ≥ 1,1

and

X2 = 0,9 for Y2 ≤ 0,9
X2 = Y2 for 0,9 ≤ Y2 ≤ 1,1
X2 = 1,1 for Y2 ≥ 1,1

with

$$Y1 = \frac{T_{amb,new} - T_{ref,old}}{T_{amb,old} - T_{ref,old}}$$

$$Y2 = \frac{T_{amb,new} - T_{fr,old}}{T_{amb,old} - T_{fr,old}}$$

After the input powers have been adjusted N times (N lying between 5 and 20) (block 59), the average power consumption $P_{ref}$, $P_{fr}$ (block 61) of the compressor 25 during the N cycles for cooling the refrigerator compartment 3 and the freezer compartment 5 is determined. Then the time $t_{ref}$ during which the refrigerator compartment 3 is cooled is adjusted (block 63) as follows:

$$t_{ref,new} = Y * \left(\frac{P_{ref}}{P_{fr}}\right) * (t_{ref,old} + t_{fr,old})$$

in which Y is a standard setting which is a measure for *inter alia* the ratio between the volumes of the refrigerator compartment and the freezer compartment. Then the control procedure is repeated starting from block 55.

Times usual in practice are 10 to 20 minutes for $t_{ref}$ and 10 to 30 minutes for $t_{fr}$.

The user must set the refrigerating device 1 for "simultaneous cooling" by means of, for example, a switch (not shown) when this user of the refrigerating device 1 puts a large quantity of goods to be frozen in in the freezer compartment 5. The freezer compartment 5 is cooled continuously during simultaneous cooling, while at the same time the refrigerator compartment 3 is cooled until $T_{ref,set}$ is reached. When $T_{ref}$ is reached, the valve 13 is closed. When the evaporator 7 has been defrosted, the refrigerator compartment 3 is cooled again in that the valve 13 is opened. The refrigerating device is operated in the alternating mode again starting from the moment the temperature in the freezer compartment 5 equals $T_{fr,set}$. This procedure may also be used during starting of the refrigerating device. It is also possible to set the refrigerating device 1 for "simultaneous cooling" by means of the microprocessor 65 when the temperature in the freezer compartment exceeds a certain maximum value.

The refrigerating device may be provided with more than two freezer or refrigerator compartments and/or several evaporators for each compartment which are cooled in a manner analogous to the one described above. A heater element may alternatively be used instead of the valve 39, so that the cooling medium condenses in a capillary owing to the heater element action and the capillary is closed off by a drop of cooling medium.

**Claims**

1. A refrigerating device provided with a first cooling circuit containing a cooling medium and comprising a compressor, a first condenser and a first evaporator, a second cooling circuit containing a cooling medium and comprising a second evaporator situated in a freezer compartment and a second condenser which is in heat–exchanging contact with the first evaporator, and a third evaporator situated in a refrigerator compartment, characterized in that the refrigerating device is provided with a third cooling circuit which contains a cooling medium, which can be closed off, and which comprises the third evaporator situated in the refrigerator compartment and a third condenser which is in heat–exchanging contact with the first evaporator.

2. A refrigerating device as claimed in Claim 1, characterized in that the first circuit is provided with at least two restrictions connected in parallel, of which at least one restriction can be completely closed and which are situated between the first condenser and the first evaporator.

3. A refrigerating device as claimed in Claim 1 or 2, characterized in that the compressor is a compressor whose power is continuously controllable.

4. A refrigerating device as claimed in Claim 3, characterized in that the compressor is controllable by means of a microprocessor.

# FIG. 1

STRT — 51

$T_{ref} \geqslant 5°C$? — 53

N

Y

$I_{ref}, I_{fr}$ — 55

$E_{ref}, E_{fr}$ — 57

$n = N$? — 59

N

Y

$P_{ref}, P_{fr}$ — 61

$t_{ref, new}$ — 63

FIG.2

μP — 65

23   25   23

FIG.3

European Patent Office

# EUROPEAN SEARCH REPORT

Application Number

EP 92 20 3309

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-2 511 851 (IWASHITA)<br>* column 4, line 8 - line 56; figure 3 *<br>--- | 1 | F25D11/02<br>F25B41/06<br>F25B49/02 |
| Y | FR-A-697 603 (PLATEN-MUNTERS REFRIGERATING SYSTEM)<br>* page 5, line 39 - line 94; figure 6 *<br>--- | 1 | |
| A | US-A-2 310 657 (SHIVELY)<br>* page 1, right column, line 5 - page 3, right column, line 40; figures 1-7 *<br>--- | 1 | |
| A | US-A-2 035 573 (SMITH)<br>* page 1, left column, line 32 - page 2, right column, line 7; figures 1-3 *<br>--- | 1 | |
| A | US-A-2 416 777 (SCHWELLER)<br>* column 2, line 14 - column 4, line 61; figures 1-2 *<br>--- | 1 | |
| A | EP-A-0 148 108 (LIEBERT)<br>* page 12, line 23 - page 13, line 29; figures 1-9 *<br>--- | 2-4 | TECHNICAL FIELDS SEARCHED (Int. Cl.5) |
| A | US-A-2 337 862 (BAER)<br>* page 2, right column, line 14 - page 4, left column, line 68; figures 1-3 *<br>--- | 2 | F25D<br>F25B |
| A | US-A-4 912 936 (DENPOU)<br>* column 2, line 22 - column 6, line 16; figures 1-7 *<br>--- | 3,4 | |
| A | US-A-4 608 833 (KOUNTZ)<br>* column 4, line 6 - column 11, line 11; figures 1-7 *<br>--- | 3,4 | |
| A | US-A-3 933 198 (HARA)<br>----- | | |

The present search report has been drawn up for all claims

| Place of search | Date of completion of the search | Examiner |
|---|---|---|
| THE HAGUE | 09 FEBRUARY 1993 | BOETS A.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)